# EUROPÄISCHE PATENTSCHRIFT

(11) **EP 0 414 086 B1**
(45) Veröffentlichungstag und Bekanntmachung des Hinweises auf die Patenterteilung: **13.10.1993**
(21) Anmeldenummer: 90115473.2
(22) Anmeldetag: 11.08.1990
(51) Int. Cl.: F16H 1/445

(54) **Sperrbares Differentialgetriebe**
Lockable differential gearing
Engrenage différentiel à verrouillage

(30) Priorität: 21.08.1989 DE 3927549
(43) Veröffentlichungstag der Anmeldung: 27.02.1991
(73) Patentinhaber: GKN AUTOMOTIVE AKTIENGESELLSCHAFT, D-53721 Siegburg (DE)
(72) Erfinder: Rickell, Robert, D-5200 Siegburg (DE)
(74) Vertreter: Neumann, Ernst Dieter, Dipl.-Ing.

(56) Entgegenhaltungen:
- EP-A- 0 264 579
- DE-A- 1 775 573
- DE-A- 3 836 552
- US-A- 3 956 945
- US-A- 4 462 272

## Beschreibung

Die Erfindung betrifft ein sperrbares Differentialgetriebe für die Anwendung in einem Kraftfahrzeug mit einem Getriebegehäuse, einem darin drehbar gelagertem Differentialkorb, in dem Achswellen drehbar gelagert und über eine im Differentialkorb gehaltene Ausgleichsräderanordnung miteinander gekoppelt sind, und einem im Differentialkorb angeordnetem Lamellensatz, dessen ersten Lamellen drehfest mit dem Differentialkorb oder einer der Achswellen und dessen zweite Lamellen drehfest mit einer bzw. der anderen der Achswellen verbunden sind, sowie mit einer Axialkräfte auf den Lamellensatz ausübenden Betätigungsvorrichtung im Getriebegehäuse, und einer am Differentialkorb oder einem mit einer der Achswellen axial fest verbundenen Teil ausgebildeten Abstützfläche. Mit der Betätigungsvorrichtung ist eine extern gesteuerte Sperrung des Differentialgetriebes möglich.

Aus der DE-A-36 36 175 ist ein Getriebe der vorstehend genannten Art bekannt, bei dem die Betätigungsvorrichtung im Getriebegehäuse geführte Druckkolben umfaßt, die über Axiallager und Druckscheiben auf das Lamellenpaket einwirken. Es ist hierbei erkannt worden, daß für den Fall, daß sich die druckbeaufschlagten Lamellen unmittelbar am Differentialkorb abstützen, in nachteiliger Weise Axialkräfte auf eines der Kegelrollenllager ausgeübt werden, mit denen der Differentialkorb im Getriebegehäuse gelagert ist. Darüber hinaus können die Abwälzverhältnisse am Tellerrad des Differentialkorbes durch die genannten Reaktionskräfte nachteilig beeinflußt werden.

Um dies zu überwinden, ist in der genannten Veröffentlichung vorgeschlagen worden, den von der Betätigungsvorrichtung beaufschlagten Lamellensatz über Zwischenelemente und ein Axialdrucklager auch in Gegenrichtung am Getriebegehäuse abzustützen. Die hierfür vorgeschlagenen Konstruktionen sind außerordentlich kompliziert. Aus der DE-A-38 13 305 ist ebenfalls ein Getriebe der vorstehend genannten Art bekannt, bei dem die Betätigungsvorrichtung zumindest einen im Getriebegehäuse geführten Ringkolben umfaßt, der über ein Axiallager und Druckstifte auf die Lamellenpakete einwirkt. Zumindest eines der Kegelrollenlager unterliegt hierbei in nachteiliger Weise Axialkräften. Die hydraulische Betätigung mit den erforderlichen rotierenden Abdichtungen ist in nachteiliger Weise kompliziert.

Aus der DE-A-38 29 701 ist ein weiteres gattungsgemäßes Getriebe bekannt, bei dem die Betätigungsvorrichtung so ausgeführt ist, daß die den Differentialkorb im Getriebegehäuse lagernden Kegelrollenlager bei Beaufschlagung des Lamellenpaketes axialkraftfrei gehalten werden können. Die auf dem hydraulischen Prinzip beruhende Betätigungsvorrichtung ist jedoch Wiederum äußerst kompliziert ausgeführt.

Der vorliegenden Erfindung liegt die Aufgabe zugrunde, ein bezüglich der Lagerbelastung neutrales Verhalten bei Beaufschlagung des Lamellensatzes durch eine vereinfachte Betätigungsvorrichtung in einem Getriebe der eingangs genannten Art mit vereinfachten konstruktiven Mitteln zu verwirklichen. Die Lösung hierfür besteht darin, daß die Betätigungsvorrichtung zwei gegeneinander verdrehbare Spreizscheiben umfaßt die auf dem Differentialkorb zentriert sind, wobei sich eine gegenüber dem Getriebegehäuse ortsfeste Spreizscheibe unmittelbar am Differentialkorb axial abstützt, die zweite gegenüber dieser axial verschiebbare Spreizscheibe den Lamellensatz beaufschlagt und die Reaktionskräfte des Lamellensatzes belastungsfrei für das Getriebegehäuse in das die Abstützfläche ausbildende Teil eingeleitet werden.

Sowohl die Betätigungskräfte für den Lamellensatz als auch die daraus resultierende Stützkraft kann von einer derartigen Spreizscheibenanordnung aus in den Differentialkorb eingeleitet werden, ohne daß irgendwelche Einflüsse auf die Verzahnungsverhältnisse oder die Lagerbelastung entstehen. Es ergibt sich eine außerordentlich einfache konstruktive Ausgestaltung.

Anstelle der Einleitung der auf den Lamellensatz ausgeübten Axialkraft unmittelbar in den Differentialkorb über eine an diesem ausgebildete Abstützfläche kann eine mittelbare Einleitung auch in der Weise erfolgen, daß die Axialkraft über eine Abstützfläche einer auf einer der Achswellen axial gesicherten Scheibe in diese Achswelle eingeleitet wird und diese sich über eine Gegenschulter und ein Axialdrucklager wieder am Differentialkorb abstützt.

Zwei bevorzugte Ausführungsbeispiele der Erfindung sind in den Zeichnungen dargestellt.
- Fig. 1: zeigt ein erfindungsgemäßes Differentialgetriebe mit unmittelbarer Krafteinleitung in den Differentialkorb,
- Fig. 2: zeigt ein erfindungsgemäßes Differentialgetriebe mit Krafteinleitung in den Differentialkorb mittelbar über eine Achswelle,
- Fig. 3: zeigt ein erfindungsgemäßes Differentialgetriebe in Planetenbauart mit unmittelbarer Krafteinleitung in den Differentialkorb und Sperrung zwischen Differentialkorb und einer Welle,
- Fig. 4: zeigt ein erfindungsgemäßes Differentialgetriebe in Planetenbauart mit unmittelbarer Krafteinleitung in den Differentialkorb und Sperrung zwischen den Achswellen.

In den Figuren ist übereinstimmend ein Getriebegehäuse 1 gezeigt, in dem über Kegelrollenlager 2, 3 ein Differentialkorb 4 gelagert ist. An den Differentialkorb ist ein Tellerrad 5 befestigt, das über ein nicht dargestelltes Kegelrad antreibbar ist. Die Achswellen 10, 11 sind über Differentialkorb 4 unmittelbar im Getriebegehäuse 1 gelagert und über Dichtungsträger 36, 37 und Dichtungen 38, 39 gegenüber diesen abgedichtet. Die Achswellen 10, 11 tragen an ihren Enden über Verzahnungen drehfest und über Sicherungsringe 12, 13 axial gesicherte Achswellenräder 14, 15. Die Achswellenräder sind über auf einem Zapfen 16 im Differentialkorb gelagerte Ausgleichsräder 17 miteinander gekoppelt. Eine Betätigungsvorrichtung 18 ist im Gehäuse im wesentlichen drehfest ausschließlich in Umfangsrichtung gegenüber diesem gehalten und besteht aus zwei über Kugeln 19 sich axial gegeneinander abstützende Spreizscheiben 20, 21. Die erste Spreizscheibe 20 stützt sich über ein Axiallager 22, eine Scheibe 23 und einen Sicherungsring 24 unmittelbar am Differentialkorb 4 ab. Die zweite Spreizscheibe wirkt über ein Axiallager 25, eine Scheibe 26, einzelne Druckstifte 27 und eine Ringscheibe 28 auf ein im Differentialkorb gehaltenes Lamellenpaket 29 ein, dessen innere Lamellen über eine Hülse 31 drehfest mit der Achswelle 10 verbunden sind und dessen Außenlamellen drehfest im Differentialkorb gehalten ist.

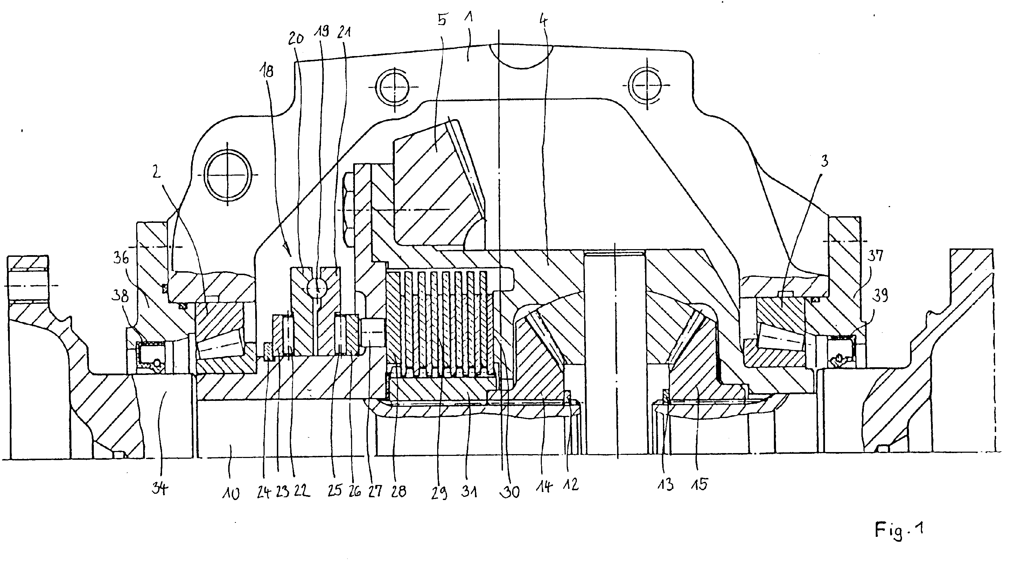

In Figur 1 stützt sich das Lamellenpaket unmittelbar an einer im Differentialkorb ausgebildeten Abstützfläche 30 ab.

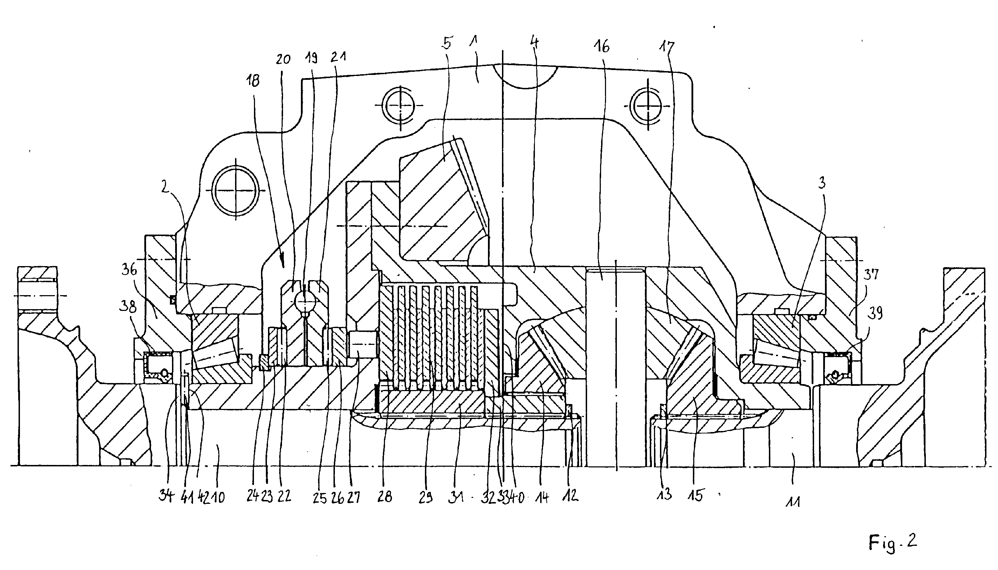

In Figur 2 wirkt das Lamellenpaket auf eine weitere Ringscheibe 32 ein, die gegenüber einer Ringfläche 40 des Differentialkorbes axiales Spiel hat, jedoch fest mit einer das Achswellenrad 14 tragenden Hülse 33 verbunden ist, die sich unmittelbar an dem Sicherungsring 12 und damit axial an der Achswelle 10 abstützt. Die Achswelle 10 weist außerhalb des Differentialkorbes eine Ringschulter 34 auf, die sich über ein Axialdrucklager 41 wiederum an einer Abstützfläche 42 des Differentialkorbes abstützt. In beiden Fällen stützen sich die von der Verstellvorrichtung erzeugten Kräfte ausschließlich am Differentialkorb unter völliger Entlastung der Lager 2, 3 ab.

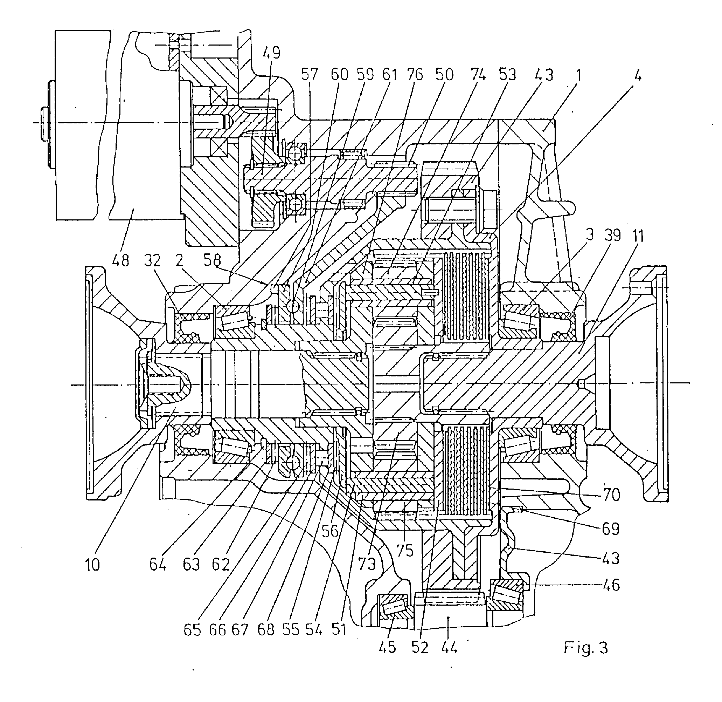

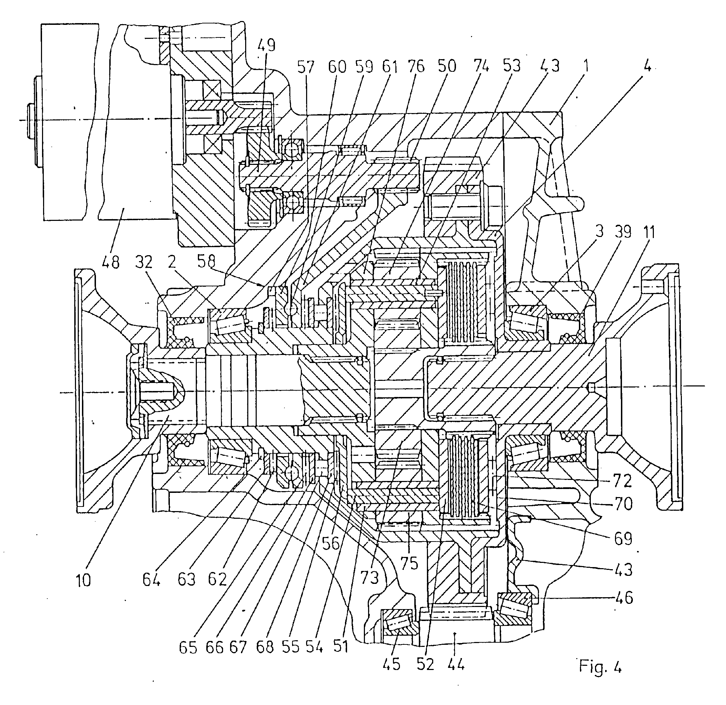

In den Figuren 3 und 4 ist übereinstimmend ein Getriebegehäuse 1 gezeigt, in dem über Schrägrollenlager 2, 3 ein Differentialkorb 4 gelagert ist. Achswellen 10, 11 sind im Differentialkorb 4 gelagert und über Dichtungen 38, 39 gegenüber dem Getriebegehäuse 1 abgedichtet. Am Differentialkorb ist ein Stirnrad 43 befestigt, das mit einem Antriebszahnrad 44 kämmt, das in Schrägrollenlagern 45, 46 im Gehäuse 1 und einem Lagerträger 47 gehalten ist. Am Getriebegehäuse 1 ist weiter ein Elektromotor 48 befestigt, der über ein Untersetzungsgetriebe 49 und ein Antriebsritzel 50 eine Spreizscheibe 61 einer Verstellvorrichtung 58 betätigt, die weiterhin über Kugeln 59 verfügt, die sich an einer ersten ortsfesten Spreizscheibe 60 abstützen. Über einen Stift 57 ist die Spreizscheibe 60 in Umfangsrichtung gegenüber dem Gehäuse 1 gesichert, während sie sich axial über ein Drucklager 62, eine Scheibe 63 und einen Sicherungsring 64 am Differentialkorb 4 abstützt. Die axial verschiebbare Spreizscheibe 61 bewirkt über ein zweites Axiallager 65 eine mit dem Differentialkorb 4 umlaufende Scheibe 66 und einen Stift 67, eine Axialverschiebung einer weiteren Ringscheibe 68, die über ein Axiallager 55 und eine weitere Ringscheibe 56 auch in Hohlbolzen 53, 54 geführte Druckstifte 51 sowie eine weitere Ringscheibe 52 auf das Lamellenpaket 69 einwirkt. Dieses stützt sich in Figur 3 unmittelbar an einer Abstützfläche 70 im Differentialkorb 4 ab, während es nach Figur 4 auf eine weitere Scheibe 71 einwirkt, das sich über ein Axiallager 72 wieder an der Abstützfläche 70 abstützt.

In Figur 3 sind die Außenlamellen des Lamellensatzes unmittelbar im Differentialkorb 4 drehfest gehalten, während die Innenlamellen drehfest auf einem Sonnenrad 73 geführt ist, das mit der Achse 11 drehfest verbunden. In Figur 4 sind die Außenlamellen in einem Lamellenkorb 77 drehfest gehalten, der mit dem Planetenträger 76 drehfest verbunden ist. Mit dem Sonnenrad 73 kämmen Planetenräder 74, während weitere Planetenräder 75 mit einer Innenverzahnung im Differentialkorb 4 in Eingriff sind. Die Planetenräder 74, 75 sind auf den zuvor genannten Hülsen 53, 54 drehbar gelagert, die ihrerseits in einem mit dem ersten der Achswellenräder 10 drehfest verbundenen Planetenträger 76 gehalten sind.

## Patentansprüche

1. Sperrbares Differentialgetriebe für die Anwendung in einem Kraftfahrzeug mit einem Getriebegehäuse (1), einem darin drehbar gelagertem Differentialkorb (4), in dem Achswellen drehbar gelagert und über eine im Differentialkorb (4) gehaltene Ausgleichsräderanordnung miteinander gekoppelt sind, und einem im Differentialkorb (4) angeordnetem Lamellensatz (29), dessen ersten Lamellen drehfest mit dem Differentialkorb (4) oder einer der Achswellen und dessen zweite Lamellen drehfest mit einer bzw. der anderen der Achswellen verbunden sind, sowie mit einer Axialkräfte auf den Lamellensatz (29) ausübenden Betätigungsvorrichtung (18) im Getriebegehäuse (1), und einer am Differentialkorb oder einem mit einer der Achswellen axial fest verbundenen Teil ausgebildeten Abstützfläche,
dadurch gekennzeichnet,
daß die Betätigungsvorrichtung (18) zwei gegeneinander verdrehbare Spreizscheiben (20, 21) umfaßt die auf dem Differentialkorb zentriert sind, wobei sich eine gegenüber dem Getriebegehäuse ortsfeste Spreizscheibe unmittelbar am Differentialkorb axial abstützt, die zweite gegenüber dieser axial verschiebbare Spreizscheibe den Lamellensatz beaufschlagt und die Reaktionskräfte des Lamellensatzes (29) belastungsfrei für das Getriebegehäuse (1) in das die Abstützfläche (30,42) ausbildende Teil eingeleitet werden.

2. Getriebe nach Anspruch 1,
dadurch gekennzeichnet,
daß sich der Lamellensatz (29) unmittelbar am Differentialkorb (4) abstützt. (Figur 1)

3. Getriebe nach Anspruch 1,
dadurch gekennzeichnet,
daß sich der Lamellensatz (29) an einer der Achswellen (10) axial abstützt und die Achswelle (10) sich über eine Gegenschulter (34) am Differentialkorb (4) abstützt. (Figur 2)

4. Getriebe nach einem der Ansprüche 1 bis 3,
dadurch gekennzeichnet,
daß ein Axiallager (22, 25) zwischen der Betätigungsvorrichtung (18) und den Mitteln zur Betätigung des Lamellensatzes (29) vorgesehen sind.

5. Getriebe nach Anspruch 1 und 3,
dadurch gekennzeichnet,
daß ein Axiallager (41) zwischen der Ringschulter (34) der Achswelle (10) und dem Differentialkorb (4) vorgesehen ist.

6. Getriebe nach einem der Ansprüche 1 bis 5,
dadurch gekennzeichnet,
daß die sich axial am Differentialkorb unmittelbar abstützende Spreizscheibe (20) verdrehbar ist und die axial verschiebbare Spreizscheibe (21) unverdrehbar im Gehäuse geführt ist.

7. Getriebe nach einem der Ansprüche 1 bis 5,
dadurch gekennzeichnet,
daß die sich axial am Differentialkorb unmittelbar abstützende Spreizscheibe (20) unverdrehbar im Gehäuse gehalten ist und die axial verschiebbare Spreizscheibe (21) zugleich verdrehbar ist.

## Claims

1. A lockable differential drive for using in a motor vehicle, having a drive housing (1); a differential carrier (4) which is rotatably supported therein and in which axle shafts are rotatably supported and connected to one another via a differential gear assembly held in the differential carrier (4); a set of plates (29) which is arranged in the differential carrier (4), whose first plates are non-rotatingly connected to the differential carrier (4) or one of the axle shafts and whose second plates are non-rotatingly connected to one or the respective other axle shaft; an actuating device (18) which is arranged in the drive housing (1) and which applies axial forces to the set of plates (29); and a supporting face provided at the differential carrier, or a part which is provided with a supporting face and which is axially firmly connected to one of the axle shafts,
characterised in
that the actuating device (18) comprises two expanding discs (20, 21) which are rotatable relative to one another and centred on the differential carrier, with one expanding disc which is fixed so as to be stationary relative to the drive housing being directly axially supported on the differential carrier, with the second expanding disc which is axially movable relative to the first loading the set of plates and with the reaction forces of the set of plates (29) being introduced into the part provided with the supporting face (30, 42) in such a way that the drive housing (1) remains load-free.

2. A drive according to claim 1,
characterised in
that the set of plates (29) is supported directly on the differential carrier (4). (Figure 1).

3. A drive according to claim 1,
characterised in
that the set of plates (29) is axially supported on one of the axle shafts (10) and that the axle shaft (10) is supported on the differential carrier (4) via a counter-shoulder (34). (Figure 2).

4. A drive according to any one of claims 1 to 3,
characterised in
that an axial bearing (22, 25) is provided between the actuating device (18) and the means for actuating the set of plates (29).

5. A drive according to claim 1 or 3,
characterised in
that an axial bearing (41) is provided between the annular shoulder (34) of the axle shaft (10) and the differential carrier (4).

6. A drive according to any one of claims 1 to 5,
characterised in
that the expanding disc (20) directly axially supported on the differential carrier is rotatable and that the axially movable expanding disc (21) is non-rotatingly guided in the housing.

7. A drive according to any one of claims 1 to 5,
characterised in
that the expanding disc (20) directly axially supported on the differential carrier is non-rotatingly held in the housing and that the axially movable expanding disc (21) is rotatable at the same time.

## Revendications

1. Engrenage différentiel verrouillable utilisable dans un véhicule automobile et comportant un carter d'engrenage (1), une cage de différentiel (4) logée à rotation dans le carter et dans laquelle sont logés à rotation des arbres primaires qui sont couplés entre eux par l'intermédiaire d'un dispositif à pignons de différentiel maintenu dans la cage de différentiel (4), et un jeu de lamelles (29) disposé dans la cage de différentiel (4) dont des premières lamelles sont reliées de manière solidaire en rotation à la cage de différentiel (4) ou à l'un des arbres primaires et dont des secondes lamelles sont reliées de manière solidaire en rotation à l'un ou l'autre des arbres primaires, ainsi qu'un dispositif d'actionnement (18) dans le carter d'engrenage (1) qui exerce des forces axiales sur le jeu de lamelles (29), et une face d'appui formée sur la cage de différentiel ou sur une partie reliée à l'un des arbres primaires de manière fixe axialement, caractérisé en ce que le dispositif d'actionnement (18) comporte deux disques d'écartement (20, 21) qui peuvent tourner l'un par rapport à l'autre et qui sont centrés sur la cage de différentiel, l'un des disques d'écartement qui est fixe par rapport au carter d'engrenage s'appuyant axialement directement sur la cage de différentiel, tandis que le second disque d'écartement déplaçable axialement par rapport au précédent sollicite le jeu de lamelles, et les forces de réaction du jeu de lamelles (29) sont transmises dans la partie formant la face d'appui (30, 42) sans charge pour le carter d'engrenage (1).

2. Engrenage selon la revendication 1, caractérisé en ce que le jeu de lamelles (29) s'appuie directement sur la cage de différentiel (4) (figure 1).

3. Engrenage selon la revendication 1, caractérisé en ce que le jeu de lamelles (29) s'appuie axialement sur l'un (10) des arbres primaires et l'arbre primaire (10) s'appuie sur la cage de différentiel (4) par l'intermédiaire d'un contre-épaulement (34) (figure 2).

4. Engrenage selon l'une des revendications 1 à 3, caractérisé en ce qu'il est prévu des paliers de butée (22, 25) entre le dispositif d'actionnement (18) et les dispositifs pour actionner le jeu de lamelles (29).

5. Engrenage selon les revendications 1 et 3, caractérisé en ce qu'il est prévu un palier de butée (41) entre l'épaulement annulaire (34) de l'arbre primaire (10) et la cage de différentiel (4).

6. Engrenage selon l'une des revendications 1 à 5, caractérisé en ce que le disque d'écartement (20) qui s'appuie axialement directement sur la cage de différentiel est susceptible de tourner et le disque d'ecartement (21) déplaçable axialement est guidé dans le carter sans pouvoir tourner.

7. Engrenage selon l'une des revendications 1 à 5, caractérisé en ce que le disque d'écartement (20) qui s'appuie axialement directement sur la cage de différentiel est maintenu dans le carter sans pouvoir tourner, tandis que le disque d'écartement (21) qui est déplaçable axialement est simultanément capable de tourner.
